# EUROPÄISCHE PATENTSCHRIFT

(11) **EP 3 935 284 B1**
(45) Veröffentlichungstag und Bekanntmachung des Hinweises auf die Patenterteilung: **08.03.2023**
(21) Anmeldenummer: 20701450.7
(22) Anmeldetag: 21.01.2020
(51) Int. Cl.: F04D 29/16, F04D 29/08

(54) **VERDICHTER**
COMPRESSOR
COMPRESSEUR

(30) Priorität: 06.03.2019 DE 102019203009
(43) Veröffentlichungstag der Anmeldung: 12.01.2022
(73) Patentinhaber: Robert Bosch GmbH, 70442 Stuttgart (DE)
(72) Erfinder: WESSNER, Jochen, 73728 Esslingen (DE); KATZ, Martin, 70469 Stuttgart (DE)
(86) Internationale Anmeldenummer: PCT/EP2020/051366
(87) Internationale Veröffentlichungsnummer: WO 2020/177941

(56) Entgegenhaltungen:
- WO-A1-2016/051916
- WO-A1-2016/059866
- US-A- 4 927 327
- US-A- 5 297 928

## Beschreibung

Die Erfindung betrifft einen Verdichter mit einem Gehäuse, in welchem ein Laufrad um eine Drehachse drehbar gelagert ist, das angetrieben wird, um mit Hilfe einer Beschaufelung auf einer Laufradvorderseite ein Medium zu verdichten, wobei eine Axialkraft auf das Laufrad entsteht, das eine Laufradrückseite aufweist, die einer Gehäusewand zugewandt ist, wobei in einem Radseitenraum zwischen der Laufradrückseite und der Gehäusewand ein Druck herrscht, der eine der Axialkraft auf der Laufradvorderseite entgegenwirkende Gegenaxialkraft auf der Laufradrückseite bewirkt.

WO2016/059866 A1 offenbart einen Verdichter wobei der Radseitenraum mit einer Labyrinth-Dichtung versehen ist.

### Stand der Technik

Der Verdichter kommt insbesondere in einem Brennstoffzellensystem mit mindestens einer Brennstoffzelle zum Einsatz. Bei der Brennstoffzelle handelt es sich um eine galvanische Zelle, welche chemische Reaktionsenergie eines kontinuierlich zugeführten Brennstoffes und eines Oxidationsmittels in elektrische Energie wandelt und dabei eine Spannung bereitstellt. Eine Brennstoffzelle ist demnach kein elektrochemischer Energiewandler. Bei bekannten Brennstoffzellen werden insbesondere Wasserstoff (H2) und Sauerstoff (O2) in Wasser (H20), elektrische Energie und Wärme umgewandelt. Zur Erhöhung der Spannung können mehrere Brennstoffzellen zu einer Brennstoffzelleneinheit zusammengefasst und elektrisch in Reihe geschaltet werden.

Ein Brennstoffzellensystem umfasst eine Brennstoffzelleneinheit, welche mehrere Brennstoffzellen aufweist, die jeweils eine Anode und Kathode umfassen. Wasserstoff als Brennstoff wird in einem Druckgasspeicher gespeichert und der Anode zugeführt. Luft, welche Sauerstoff als Oxidationsmittel enthält, wird der Kathode vorzugsweise durch einen elektrisch angetriebenen Kompressor oder Verdichter zugeführt.

Ein derartiger Kompressor umfasst eine Lagereinheit, welche insbesondere ein Luftlager sowie eine in dem Luftlager drehbar gelagerte Welle umfasst. Die drehbar gelagerte Welle rotiert im Betrieb des Kompressors mit einer verhältnismäßig hohen Drehzahl, die in der Größenordnung von 100.000 Umdrehungen pro Minute liegt.

### Offenbarung der Erfindung

Aufgabe der Erfindung ist es, einen Verdichter gemäß dem Oberbegriff des Anspruchs 1 funktionell, insbesondere im Hinblick auf den Betrieb in einem Brennstoffzellensystem, zu verbessern.

Die Aufgabe ist bei einem Verdichter mit einem Gehäuse, in welchem ein Laufrad um eine Drehachse drehbar gelagert ist, das angetrieben wird, um mit Hilfe einer Beschaufelung auf einer Laufradvorderseite ein Medium zu verdichten, wobei eine Axialkraft auf das Laufrad entsteht, das eine Laufradrückseite aufweist, die einer Gehäusewand zugewandt ist, wobei in einem Radseitenraum zwischen der Laufradrückseite und der Gehäusewand ein Druck herrscht, der eine der Axialkraft auf der Laufradvorderseite entgegenwirkende Gegenaxialkraft auf der Laufradrückseite bewirkt, dadurch gelöst, dass der Radseitenraum durch fliehkraftwirksame Dichtungen in Teildruckräume unterteilt ist. Der Verdichter mit dem Laufrad ist vorzugsweise so oder so ähnlich wie ein herkömmlicher Abgasturbolader mit einem offenen Laufrad ausgeführt. Der Verdichter wird insbesondere zur Luftversorgung in einem Brennstoffzellensystem eingesetzt. Daher kann der Verdichter auch als Luftkompressor bezeichnet werden. Der Verdichter arbeitet vorzugsweise ohne Schmierung. Zur Lagerung des Laufrads in dem Gehäuse des Verdichters werden vorzugsweise Folienlager verwendet, die auch als Luftlager bezeichnet werden. Folienlager oder Luftlager haben deutlich geringere Lagertragfähigkeiten als herkömmliche Lager mit Ölschmierung. Der Begriff fliehkraftwirksam bedeutet in Zusammenhang mit den Dichtungen, dass deren Dichtwirkung fliehkraftabhängig ist und insbesondere von der Drehzahl des Laufrads im Betrieb des Verdichters abhängt. Durch die fliehkraftwirksamen Dichtungen können in den Teildruckräumen drehzahlabhängig Druckfelder erzeugt werden, durch welche die im Betrieb auf der Laufradvorderseite wirkenden Axialkräfte über einen größeren Drehzahlbereich hinweg kompensiert werden. Das liefert unter anderem den Vorteil, dass der Verdichter an verschiedenen Betriebspunkten mit einem höheren Wirkungsgrad betrieben werden kann als herkömmliche Verdichter. Dadurch kann der benötigte Bauraum reduziert werden. Darüber hinaus kann die Lebensdauer von zur Lagerung des Laufrads in dem Gehäuse des Verdichters verwendeten Lagern, insbesondere Folienlagern oder Luftlagern, verlängert werden.

Bei Drehzahlen unterhalb eines definierten Betriebspunkts des Verdichters wird zum Beispiel ein größerer Bereich des Radseitenraums mit einem Eingangsdruck oder Niederdruck beaufschlagt als bei Drehzahlen oberhalb des definierten Betriebspunkts. Bei höheren Drehzahlen öffnet dann mindestens eine der fliehkraftwirksamen Dichtungen, so dass mindestens ein weiterer Teildruckraum mit dem Ausgangsdruck oder mit einem Zwischendruck des Verdichters beaufschlagt wird. Bei noch höherer Drehzahl öffnet eine weitere fliehkraftwirksame Dichtung, so dass noch ein größerer Bereich des Radseitenraums mit dem Ausgangsdruck des Verdichters oder mit einem Zwischendruck beaufschlagt wird. Bei Höchstdrehzahl ist vorteilhaft fast der komplette Radseitenraum des Verdichters mit dem Ausgangsdruck des Verdichters beaufschlagt.

Ein bevorzugtes Ausführungsbeispiel des Verdichters ist dadurch gekennzeichnet, dass die fliehkraftwirksamen Dichtungen als Ringdichtungen ausgeführt sind, die den Radseitenraum in mindestens drei Ringräume unterteilen. Die drei Ringräume können mit Hilfe der fliehkraftwirksamen Dichtungen vorzugsweise mit mindestens zwei unterschiedlichen Drücken beaufschlagt werden. Zu diesem Zweck können die fliehkraftwirksamen Dichtungen unterschiedlich ausgeführt sein. Die Ringdichtungen können zum Beispiel einen geschlossenen Ringkörper aufweisen. Die Ringdichtungen können alternativ oder zusätzlich segmentiert ausgeführt sein. Die Ringdichtungen sind besonders vorteilhaft aus einem elastischen Material gebildet. Die Ringdichtungen können, im Querschnitt betrachtet, einen biegsamen Arm aufweisen, dessen freies Ende einen Dichtkörper darstellt. An dem freien Ende des biegsamen Arms kann auch ein Dichtkörper ausgebildet sein, der eine Massenanhäufung darstellt. Dadurch kann eine gewünschte Fliehkraftwirkung besser ausgenutzt werden.

Ein weiteres bevorzugtes Ausführungsbeispiel des Verdichters ist dadurch gekennzeichnet, dass die fliehkraftwirksamen Dichtungen so ausgeführt und angeordnet sind, dass bei Drehzahlen unterhalb eines Auslegungspunktes ein größerer Bereich des Radseitenraums mit einem Eingangsdruck des Verdichters beaufschlagt wird als bei Drehzahlen oberhalb des Auslegungspunktes. Der Ausgangsdruck des Verdichters ist im Betrieb deutlich größer als der Eingangsdruck des Verdichters. Bei kleinen Drehzahlen des Verdichters reicht ein eher geringerer Druck aus, um eine eher kleine Gegenaxialkraft auf der Laufradrückseite zu erzeugen.

Ein weiteres bevorzugtes Ausführungsbeispiel des Verdichters ist dadurch gekennzeichnet, dass durch die fliehkraftwirksamen Dichtungen ein Spalt zwischen der Laufradrückseite und der Gehäusewand minimiert wird. Die fliehkraftwirksamen Dichtungen wirken so ähnlich wie ein Fliehkraftventil, das fliehkraftabhängig öffnet und schließt. Theoretisch kann der Spalt zwischen der Laufradrückseite und der Gehäusewand auf Null reduziert werden. Allerdings wird der Spalt zwischen der Laufradrückseite und der Gehäusewand im Betrieb des Verdichters eher nicht auf Null reduziert, sondern nur minimiert, um einen unerwünschten Verschleiß im Betrieb des Verdichters zu minimieren. Durch einen minimalen Spalt zwischen der Laufradrückseite und der Gehäusewand wird besonders vorteilhaft ein Kontakt zwischen dem Laufrad und dem Gehäuse vermieden.

Ein weiteres bevorzugtes Ausführungsbeispiel des Verdichters ist dadurch gekennzeichnet, dass ein radial innerer Teildruckraum mit einem Eingangsdruck des Verdichters beaufschlagt ist. Der Eingangsdruck des Verdichters ist deutlich kleiner als der Ausgangsdruck. Mit dem geringen Eingangsdruck in dem inneren Teildruckraum kann die Gegenaxialkraft auf der Laufradrückseite bei geringen Drehzahlen klein gehalten werden.

Ein weiteres bevorzugtes Ausführungsbeispiel des Verdichters ist dadurch gekennzeichnet, dass ein radial mittlerer Teildruckraum mit einem Zwischendruck beaufschlagt ist, der kleiner als der Ausgangsdruck und größer als der Eingangsdruck des Verdichters ist. Dem mittleren Teildruckraum ist zu diesem Zweck zum Beispiel ein separater Zwischendruckanschluss zugeordnet. Über den Zwischendruckanschluss kann ein gewünschter Zwischendruck bereitgestellt werden.

Ein weiteres bevorzugtes Ausführungsbeispiel des Verdichters ist dadurch gekennzeichnet, dass die fliehkraftwirksamen Dichtungen mindestens einen Dichtring umfassen, der an dem Laufrad angeordnet ist. Der Dichtring kann einstückig mit dem Laufrad ausgeführt sein. Der Dichtring kann aber auch aus einem anderen Material als das Laufrad gebildet sein. Das Laufrad ist vorzugsweise aus einem metallischen Material, zum Beispiel einem Aluminiummaterial, gebildet. Der Dichtring ist vorzugsweise aus einem elastischen Material, zum Beispiel einem elastomeren Material, gebildet. Der Dichtring kann in eine entsprechende Nut des Laufrads eingelegt sein. Der Dichtring kann auch anderweitig mit dem Laufrad verbunden sein.

Ein weiteres bevorzugtes Ausführungsbeispiel des Verdichters ist dadurch gekennzeichnet, dass die fliehkraftwirksamen Dichtungen mindestens einen Dichtring umfassen, der an der Gehäusewand angeordnet ist und der mit dem Dichtring an dem Laufrad zusammenwirkt. Eine radial innere Ringdichtung umfasst vorteilhaft einen Laufraddichtring, der radial innerhalb eines Gehäusewanddichtrings angeordnet ist. Eine radial äußere Ringdichtung umfasst vorteilhaft einen Laufraddichtring, der radial außerhalb eines Gehäusewanddichtrings angeordnet ist. So kann die Fliehkraftwirkung in gewünschter Art und Weise wirksam ausgenutzt werden. Bei zwei Ringdichtungen können die Gehäusewanddichtringe auch in einem Gehäusewanddichtabsatz kombiniert werden.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind.

### Kurze Beschreibung der Zeichnung

Es zeigen:
Figur 1 eine schematische Darstellung eines Verdichters mit einem Gehäuse, in welchem ein Laufrad um eine Drehachse drehbar gelagert ist, im Betrieb bei einer kleinen Drehzahl;
Figur 2 den Verdichter aus Figur 1 im Betrieb bei einer großen Drehzahl;
Figur 3 eine schematische Darstellung einer fliehkraftwirksamen Dichtung, die einen geschlossenen Dichtring umfasst;
Figur 4 eine ähnliche Dichtung wie in Figur 3 mit einem segmentierten Dichtring;
Figur 5 eine schematische Darstellung einer Dichtung mit einem biegsamen Arm gemäß einer ersten Ausführungsform im Querschnitt; und
Figur 6 eine ähnliche Dichtung wie in Figur 5 gemäß einer zweiten Ausführungsform.

### Beschreibung der Ausführungsbeispiele

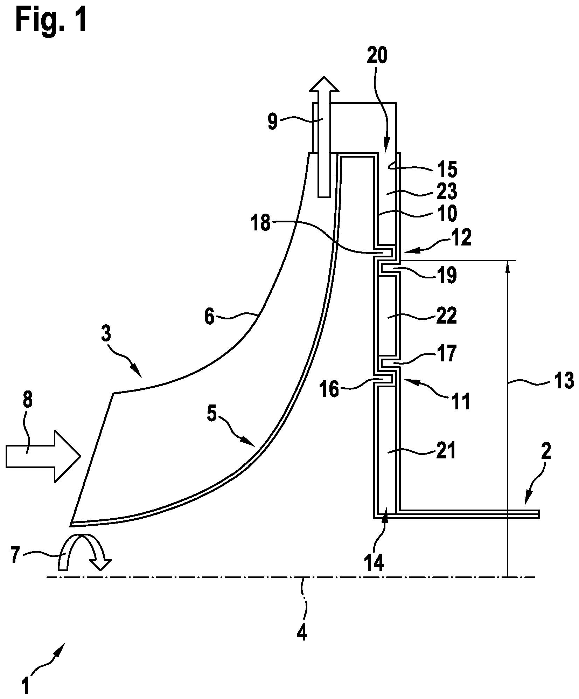

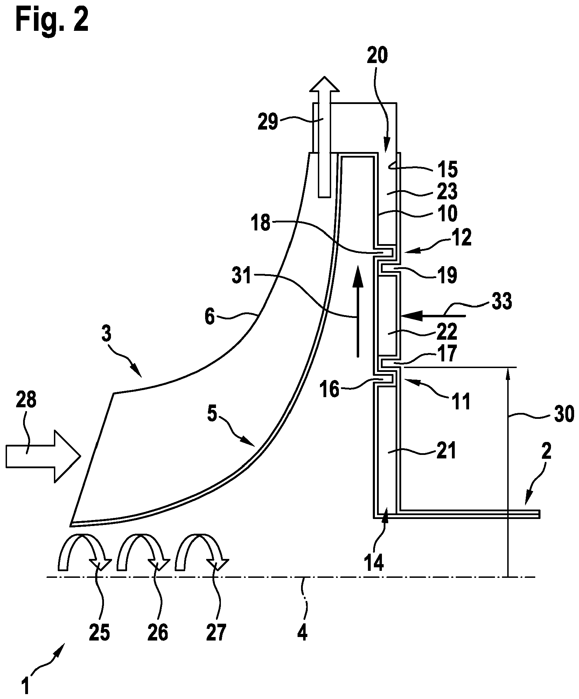

In den Figuren 1 und 2 ist ein Verdichter 1 mit einem Gehäuse 2 schematisch im Betrieb bei unterschiedlich großen Drehzahlen dargestellt. Der Verdichter 1 umfasst ein offenes Laufrad 3, das um eine Drehachse 4 drehbar in dem Gehäuse 2 gelagert ist. Zur Lagerung des Laufrads 3 dient mindestens ein (nicht dargestelltes) Luftlager oder Folienlager.

Auf einer Laufradvorderseite 5 ist das Laufrad 3 mit einer Beschaufelung 6 ausgestattet. Durch einen Pfeil 7 und durch insgesamt drei Pfeile 25, 26, 27 ist in den Figuren 1 und 2 angedeutet, dass das Laufrad 3 in den Figuren 1 und 2 bei unterschiedlich großen Drehzahlen betrieben wird.

Durch Pfeile 8 und 28 ist in den Figuren 1 und 2 einströmende Luft angedeutet, die mit Hilfe der Beschaufelung 6 des Laufrads 3 in dem Verdichter 1 verdichtet wird. Die verdichtete oder komprimierte Luft tritt radial außen an der Beschaufelung 6 des Laufrads 4 aus, wie in den Figuren 1 und 2 durch Pfeile 9 und 29 angedeutet ist.

Das Laufrad 3 ist mit einer Laufradrückseite 10 einer Gehäusewand 15 des Gehäuses 2 zugewandt. Ein Zwischenraum 14 zwischen der Laufradrückseite 10 und der Gehäusewand 15 wird auch als Radseitenraum 20 bezeichnet. In dem Radseitenraum 20 sind fliehkraftwirksame Dichtungen 11, 12 angeordnet.

Die fliehkraftwirksamen Dichtungen 11, 12 sind als Ringdichtungen ausgeführt.

Die Ringdichtungen 11, 12 umfassen jeweils zwei Dichtringe 16, 17 und 18, 19. Die Dichtringe 16 und 18 sind an dem Laufrad 3 vorgesehen. Die Dichtringe 17 und 19 sind an der Gehäusewand 15 vorgesehen.

In Figur 1 ist durch einen Pfeil 13 ein Dichtdurchmesser der Ringdichtung 12 angedeutet. In Figur 2 ist durch einen Pfeil 30 ein Dichtdurchmesser der Ringdichtung 11 angedeutet.

Die Dichtungen 11 und 12 dienen in dem Radseitenraum 20 zur Darstellung von Teildruckräumen 21, 22, 23, die als Ringräume ausgeführt sind. Die Teildruckräume 21bis 23 werden im Betrieb des Verdichters 1 drehzahlabhängig mit unterschiedlichen Drücken beaufschlagt.

In Figur 1 ist durch die Pfeil 8 und 9 angedeutet, dass der Verdichter 1 ein Medium, insbesondere ein Fluid, wie Luft, im Betrieb bei einer kleinen Drehzahl 7 radial nach außen fördert. Dabei wird das Fluid von einem Druckniveau p₁ auf ein Druckniveau p₂ angehoben.

Das Druckniveau p₁ wird auch als Eingangsdruck des Verdichters 1 bezeichnet. Das Druckniveau p₂ wird auch als Ausgangsdruck des Verdichters 1 bezeichnet. Der Teildruckraum 23 ist immer mit dem hohen Ausgangsdruck p₂ beaufschlagt und erzeugt damit eine axiale Kraft entgegen dem Druckfeld auf der Laufradvorderseite 5.

Bei der eher geringen Drehzahl 7 ist ein Spalt am Dichtdurchmesser 13 an der Dichtung 12 geschlossen. Ein Spalt an der radial inneren oder unteren Dichtstelle bei der Dichtung 11 ist offen. So wird erreicht, dass unterhalb oder radial innerhalb der Dichtung 12 nur der kleinere Druck p₁ oder Eingangsdruck des Verdichters 1 herrscht. Bei dem Eingangsdruck handelt es sich zum Beispiel um Umgebungsdruck.

In Figur 2 ist veranschaulicht, dass sich das Druckbild bei höheren Drehzahlen, die durch die drei Pfeile 25 bis 27 in Figur 2 angedeutet sind, umkehrt. In Figur 2 ist durch den Dichtdurchmesser 30 angedeutet, dass bei höheren Drehzahlen die Dichtung 11 geschlossen ist, während die Dichtung 12 fliehkraftbedingt öffnet.

Durch einen Pfeil 31 ist in Figur 2 angedeutet, dass zusätzlich zu dem Teildruckraum 23 auch der Teildruckraum 22 mit dem höheren Ausgangsdruck oder p₂ des Verdichters 1 beaufschlagt ist.

In Figur 2 ist durch einen Pfeil 33 angedeutet, dass der Teildruckraum 22 auch mit einem Zwischendruck beaufschlagt werden kann. Der Zwischendruck ist vorzugsweise größer als der Eingangsdruck oder Umgebungsdruck, aber kleiner als der Ausgangsdruck des Verdichters 1.

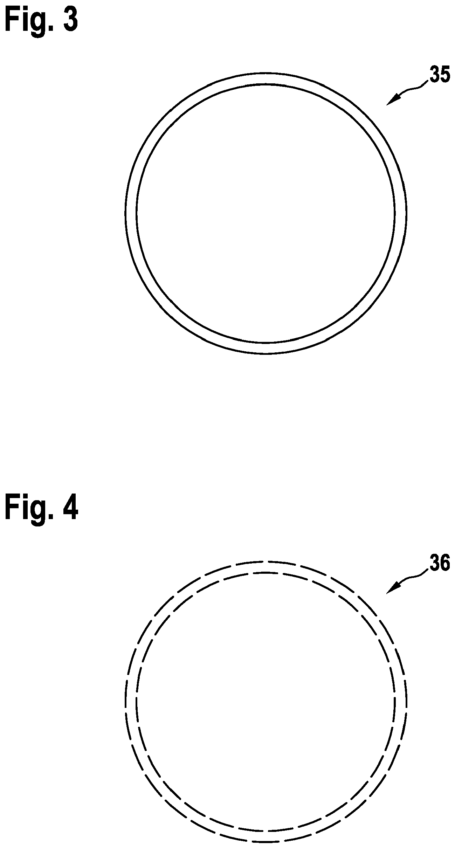

In Figur 3 ist ein Dichtring 35 in der Draufsicht dargestellt. Der Dichtring 35 dient zum Beispiel zur Darstellung eines der Dichtringe 16, 18 in den Figuren 1 und 2. Der Dichtring 35 ist als geschlossener Dichtring ausgeführt.

In Figur 4 ist ein segmentierter Dichtring 36 dargestellt. Der Dichtring 36 kann zum Beispiel zur Darstellung der Dichtringe 16 und 18 in den Figuren 1 und 2 verwendet werden.

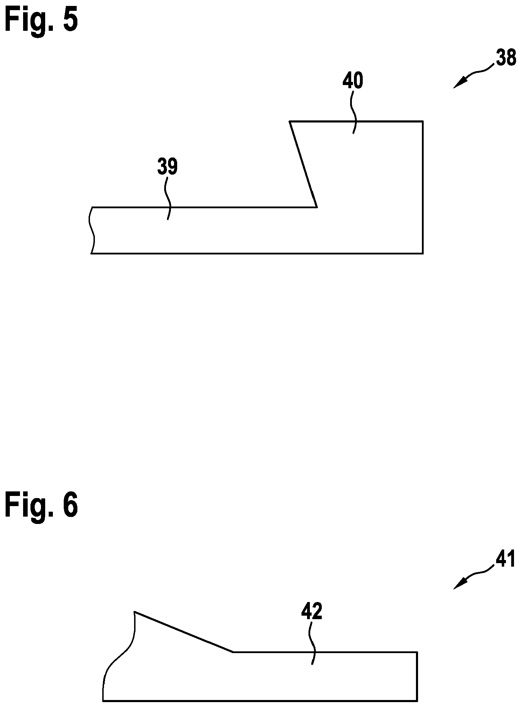

In den Figuren 5 und 6 sind Dichtungen 38, 41 im Querschnitt dargestellt. Die Dichtungen 38, 41 können zum Beispiel zur Darstellung der Dichtringe 17, 19 in den Figuren 1 und 2 verwendet werden.

Die Dichtung 38 in Figur 5 umfasst im Querschnitt einen biegsamen Arm 39. Am freien Ende des biegsamen Arms 39 ist ein Dichtkörper 40 ausgebildet, der eine Massenanhäufung darstellt. Durch die Massenanhäufung in Form des Dichtkörpers 40 am freien Ende des biegsamen Arms 39 kann unter Fliehkraftwirkung eine gewünscht große Auslenkung realisiert werden.

Die in Figur 6 dargestellte Dichtung 41 umfasst einen biegsamen Arm 42 ohne Massenanhäufung an seinem freien Ende.

## Patentansprüche

1. Verdichter (1) mit einem Gehäuse (2), in welchem ein Laufrad (3) um eine Drehachse (4) drehbar gelagert ist, das angetrieben wird, um mit Hilfe einer Beschaufelung (6) auf einer Laufradvorderseite (5) ein Medium zu verdichten, wobei eine Axialkraft auf das Laufrad (3) entsteht, das eine Laufradrückseite (10) aufweist, die einer Gehäusewand (15) zugewandt ist, wobei in einem Radseitenraum (20) zwischen der Laufradrückseite (10) und der Gehäusewand (15) ein Druck herrscht, der eine der Axialkraft auf der Laufradvorderseite (5) entgegenwirkende Gegenaxialkraft auf der Laufradrückseite (10) bewirkt, **dadurch gekennzeichnet, dass** der Radseitenraum (20) durch fliehkraftwirksame Dichtungen (11,12;38;41) in Teildruckräume (21,22,23) unterteilt ist.

2. Verdichter nach Anspruch 1, **dadurch gekennzeichnet, dass** die fliehkraftwirksamen Dichtungen (11,12;38;41) als Ringdichtungen ausgeführt sein, die den Radseitenraum (20) in mindestens drei Ringräume unterteilen.

3. Verdichter nach einem der vorhergehenden Ansprüche, **dadurch gekennzeichnet, dass** die fliehkraftwirksamen Dichtungen (11,12;38;41) so ausgeführt und angeordnet sind, dass bei Drehzahlen unterhalb eines Auslegungspunktes ein größerer Bereich des Radseitenraums (20) mit einem Eingangsdruck des Verdichters (1) beaufschlagt wird als bei Drehzahlen oberhalb des Auslegungspunktes.

4. Verdichter nach Anspruch 3, **dadurch gekennzeichnet, dass** durch die fliehkraftwirksamen Dichtungen (11,12;38;41) ein Spalt zwischen der Laufradrückseite (10) und der Gehäusewand (15) minimiert wird.

5. Verdichten nach einem der vorhergehenden Ansprüche, **dadurch gekennzeichnet, dass** ein radial innerer Teildruckraum (21) mit einem Eingangsdruck des Verdichters (1) beaufschlagt ist.

6. Verdichter nach einem der vorhergehenden Ansprüche, **dadurch gekennzeichnet, dass** ein radial mittlerer Teildruckraum (22) mit einem Zwischendruck (33) beaufschlagt ist, der kleiner als der Ausgangsdruck und größer als der Eingangsdruck des Verdichters (1) ist.

7. Verdichter nach einem der vorhergehenden Ansprüche, **dadurch gekennzeichnet, dass** die fliehkraftwirksamen Dichtungen (11,12;38;41) mindestens einen Dichtring (16,18;35;36) umfassen, der an dem Laufrad (3) angeordnet ist.

8. Verdichter nach Anspruch 7, **dadurch gekennzeichnet, dass** die fliehkraftwirksamen Dichtungen (11,12;38;41) mindestens einen Dichtring (17,19) umfassen, der an der Gehäusewand (15) angeordnet ist und der mit dem Dichtring (16,18) an dem Laufrad (3) zusammenwirkt.

## Claims

1. Compressor (1) comprising a housing (2) in which an impeller (3) is mounted so as to be rotatable about an axis of rotation (4) and is driven in order to compress a medium with the aid of a blading (6) on an impeller front side (5), wherein an axial force is produced on the impeller (3), which has an impeller rear side (10) facing a housing wall (15), wherein a pressure prevails in an impeller side space (20) between the impeller rear side (10) and the housing wall (15), said pressure bringing about an opposing axial force, which counteracts the axial force on the impeller front side (5), on the impeller rear side (10), **characterized in that** the impeller side space (20) is divided into pressure sub-spaces (21, 22, 23) by seals (11, 12; 38; 41) which are operative under centrifugal force.

2. Compressor according to Claim 1, **characterized in that** the seals (11, 12; 38; 41) which are operative under centrifugal force are embodied as ring seals which divide the impeller side space (20) into at least three ring spaces.

3. Compressor according to either of the preceding claims, **characterized in that** the seals (11, 12; 38; 41) which are operative under centrifugal force are embodied, and arranged, such that an inlet pressure of the compressor (1) is applied to a greater region of the impeller side space (20) at rotational speeds below a design point than at rotational speeds above the design point.

4. Compressor according to Claim 3, **characterized in that** a gap between the impeller rear side (10) and the housing wall (15) is minimized by the seals (11, 12; 38; 41) which are operative under centrifugal force.

5. Compressor according to one of the preceding claims, **characterized in that** an inlet pressure of the compressor (1) is applied to a radially inner pressure sub-space (21).

6. Compressor according to one of the preceding claims, **characterized in that** an intermediate pressure (33) which is smaller than the outlet pressure and greater than the inlet pressure of the compressor (1) is applied to a radially central pressure sub-space (22).

7. Compressor according to one of the preceding claims, **characterized in that** the seals (11, 12; 38; 41) which are operative under centrifugal force comprise at least one sealing ring (16, 18; 35; 36) which is arranged on the impeller (3).

8. Compressor according to Claim 7, **characterized in that** the seals (11, 12; 38; 41) which are operative under centrifugal force comprise at least one sealing ring (17, 19) which is arranged on the housing wall (15) and which interacts with the sealing ring (16, 18) on the impeller (3).

## Revendications

1. Compresseur (1) comprenant un boîtier (2), dans lequel une roue mobile (3) est montée de manière rotative autour d'un axe de rotation (4), qui est entraînée pour comprimer un fluide à l'aide d'un aubage (6) sur un côté avant de roue mobile (5), une force axiale étant produite sur la roue mobile (3), qui présente un côté arrière de roue mobile (10) qui est tourné vers une paroi de boîtier (15), une pression régnant dans un espace latéral de roue (20) entre le côté arrière de roue mobile (10) et la paroi de boîtier (15), qui provoque une force contre-axiale sur le côté arrière de roue mobile (10) s'opposant à la force axiale sur le côté avant de roue mobile (5), **caractérisé en ce que** l'espace latéral de roue (20) est divisé par des joints d'étanchéité à effet centrifuge (11, 12 ; 38 ; 41) en espaces de pression partiels (21, 22, 23).

2. Compresseur selon la revendication 1, **caractérisé en ce que** les joints d'étanchéité à effet centrifuge (11, 12 ; 38 ; 41) sont réalisés sous forme de joints d'étanchéité annulaires qui divisent l'espace latéral de roue (20) en au moins trois espaces annulaires.

3. Compresseur selon l'une quelconque des revendications précédentes, **caractérisé en ce que** les joints d'étanchéité à effet centrifuge (11, 12 ; 38 ; 41) sont réalisés et agencés de telle sorte que, pour des vitesses de rotation inférieures à un point de dimensionnement, une zone plus grande de l'espace latéral de roue (20) est soumise à une pression d'entrée du compresseur (1) que pour des vitesses de rotation supérieures au point de dimensionnement.

4. Compresseur selon la revendication 3, **caractérisé en ce que** les joints d'étanchéité à effet centrifuge (11, 12 ; 38 ; 41) minimisent une fente entre le côté arrière de roue mobile (10) et la paroi de boîtier (15).

5. Compresseur selon l'une quelconque des revendications précédentes, **caractérisé en ce qu'**un espace de pression partiel radialement intérieur (21) est soumis à une pression d'entrée du compresseur (1).

6. Compresseur selon l'une quelconque des revendications précédentes, **caractérisé en ce qu'**un espace de pression partiel radialement central (22) est soumis à une pression intermédiaire (33) qui est inférieure à la pression de sortie et supérieure à la pression d'entrée du compresseur (1).

7. Compresseur selon l'une quelconque des revendications précédentes, **caractérisé en ce que** les joints d'étanchéité à effet centrifuge (11, 12 ; 38 ; 41) comprennent au moins une bague d'étanchéité (16, 18 ; 35 ; 36) qui est agencée sur la roue mobile (3).

8. Compresseur selon la revendication 7, **caractérisé en ce que** les joints d'étanchéité à effet centrifuge (11, 12 ; 38 ; 41) comprennent au moins une bague d'étanchéité (17, 19) qui est agencée sur la paroi de boîtier (15) et qui coopère avec la bague d'étanchéité (16, 18) sur la roue mobile (3).
